# EUROPÄISCHE PATENTSCHRIFT

(11) **EP 2 665 679 B1**
(45) Veröffentlichungstag und Bekanntmachung des Hinweises auf die Patenterteilung: **19.10.2016**
(21) Anmeldenummer: 12703953.5
(22) Anmeldetag: 16.01.2012
(51) Int. Cl.: C01B 13/11, B01J 19/08

(54) **LEICHTE EIGENSICHERE OZONELEKTRODE**
LIGHTWEIGHT, INTRINSICALLY SAFE OZONE ELECTRODE
ÉLECTRODE D'OZONE LÉGÈRE À SÉCURITÉ INTRINSÈQUE

(30) Priorität: 19.01.2011 DE 102011008947
(43) Veröffentlichungstag der Anmeldung: 27.11.2013
(73) Patentinhaber: Xylem IP Holdings LLC, White Plains, NY 10604 (US)
(72) Erfinder: FIETZEK, Reiner, 32049 Herford (DE); BILLING, Ernst, Martin, 33649 Bielefeld (DE); FIEKENS, Ralf, 33758 Stukenbrock (DE)
(74) Vertreter: Lenzing Gerber Stute
(86) Internationale Anmeldenummer: PCT/EP2012/000153
(87) Internationale Veröffentlichungsnummer: WO 2012/097970

(56) Entgegenhaltungen:
- EP-A1- 0 461 752
- EP-B1- 0 789 666
- WO-A1-02/096798

## Beschreibung

Die vorliegende Erfindung betrifft eine Vorrichtung zur Erzeugung von Ozon gemäß dem Anspruch 1. Ozon ist ein starkes Oxidationsmittel für organische Substanzen und für anorganische Verbindungen, welche Elemente mit mehreren Oxidationsstufen enthalten. Von den vielfältigen Anwendungsgebieten für Ozon ist unter anderem der Einsatz bei der Wasseraufbereitung zu erwähnen.

Technisch lässt sich Ozon durch stille elektrische Entladung in einem sauerstoffhaltigen Gas erzeugen. Unter stiller elektrischer Entladung wird im Gegensatz zu einer Funkenentladung eine stabile Plasmaentladung oder Koronaentladung verstanden. Dabei wird molekularer Sauerstoff in atomaren Sauerstoff dissoziiert. Die reaktionsfreudigen Sauerstoffatome lagern sich dann in einer exothermen Reaktion an molekularen Sauerstoff an und bilden dreiatomige Sauerstoffmoleküle, also Ozon. Die Ozonausbeute ist unter anderem von der elektrischen Feldstärke und der Betriebstemperatur abhängig.

Außerdem wurde eine Abhängigkeit von der Gaszusammensetzung beobachtet. Die Abhängigkeit von der Betriebstemperatur beruht darauf, dass Ozon bei höheren Temperaturen schneller wieder zu molekularem Sauerstoff zerfällt und durch die dadurch bedingte Verschiebung des Gleichgewichts zwischen entstehendem und zerfallendem Ozon die verfügbare Ozonkonzentration geringer ist. Höhere Feldstärken, die ebenfalls zu einer erhöhten Ozonausbeute führen, können u.a durch eine Verringerung des Spaltes und durch die Auswahl von Dielektrika mit höherer relativer Dielektrizitätskonstante erzielt werden. Für Dielektrika mit hoher relativer Dielektrizitätskonstante kommen dotierte Gläser oder keramische Materialien in Frage. Allerdings haben Dielektrika aus keramischen Materialien den Nachteil, dass sie inhomogen sind und praktisch eine geringere Durchschlagsfestigkeit als homogene Materialien haben können. Darüber hinaus sind hochwertige keramische Materialien als Formkörper mit hoher Maßhaltigkeit extrem teuer. Dünnere Dielektrika erhöhen darüber hinaus das Risiko eines dielektrischen Durchschlags.

Einer Verringerung des Spalts sind Grenzen gesetzt durch unvermeidbare Fertigungstoleranzen sowie Biegungen und Verwerfungen durch mechanische Belastungen und Wärmeausdehnung im Betrieb. Da eine Feldstärkeerhöhung durch Verringerung der Spaltbreite und Verwendung von Dielektrika mit großer Dielektrizitätskonstante zu einem erheblichen Anstieg der Herstellungskosten führt, sind hier wirtschaftliche Grenzen gesetzt.

Eine Vorrichtung der eingangs genannten Art ist aus der WO 93/16001 bekannt. Die elektrisch leitfähige und wärmeleitfähige, gasdurchlässige Anordnung wird dabei von einer Anzahl schraubenförmiger Windungen gebildet, die eine Serie von gekrümmten Oberflächen ausbilden, zwischen denen und der benachbarten Elektrode eine elektrische Koronaentladung ausgebildet wird. Die vorbekannte Vorrichtung ist im wesentlichen zylindersymmetrisch ausgeführt. Dabei bildet in allen Ausführungsbeispielen die Anordnung zusammen mit einem in ihr liegenden Leiter die Innenelektrode. Dieser Leiter ist ein Draht oder ein Rohr, er ist mechanisch am rohrförmigen Dielektrikum angeordnet und zentriert. Die Anordnung selber ist eine Füllung, die keine Zentrieraufgaben hat.

Aus der JP 1-51303 ist eine Vorrichtung der eingangs genannten Art bekannt, die ebenfalls im wesentlichen zylindersymmetrisch ausgeführt ist. Zwei Rohre werden durch randseitige Abstandshalter gegeneinander zentriert gehalten. Der zwischen ihnen befindliche ringförmige Spalt ist durch die Anordnung gefüllt, die als Füllmaterial beschrieben ist. Sie ist unregelmäßig angeordnet, was bei einem Füllmaterial zwangsläufig der Fall ist und hat nicht die Aufgabe einer mechanischen Zentrierung des inneren Rohrs im äußeren Rohr.

In beiden genannten Dokumenten ist mittig in der Elektrodenanordnung als Träger für das Füllmaterial ein metallische Leiter vorgesehen, der auch zur elektrischen Kontaktierung des Füllmaterials dient.

Der nächstkommende Stand der Technik ist in der EP 0 789 666 B1 dargestellt. Dieses Dokument beschreibt Ozonerzeuger mit einer direkt gekühlten Außenelektrode und einer stabförmigen metallischen Innenelektrode mit einem dazwischen liegenden Dielektrikum. Zwischen den Elektroden und dem Dielektrikum ist jeweils ein Drahtgestrick angeordnet, das zum einen den Wärmeübergang von dem Einsatzgas auf die gekühlten Elektroden verbessert und zum anderen eine Vielzahl von Hohlräumen für die stille Entladung darstellt.

Durch die elektrisch leitfähige und wärmeleitfähige gasdurchlässige Anordnung wird erreicht, dass bei erzwungener Kühlung der Elektroden auch die durch die Entladung sowie durch die exotherme Reaktion des atomaren mit dem molekularen Sauerstoff entstehende Wärme im Spalt zwischen der Elektrode und dem Dielektrikum sowie aus dem Dielektrikum besser abgeführt wird, da einmal eine direkte wärmeleitende Verbindung zwischen der Elektrode und dem Dielektrikum besteht und zum anderen die Wärmeübergangsfläche zum durchströmenden Gas wesentlich erhöht wird, während der Wärmeübergangsweg zu sämtlichen Punkten innerhalb des Spaltes verringert ist. Da Ozon die Tendenz hat, mit zunehmender Temperatur wieder zu zerfallen und sich somit ein temperaturabhängiges Gleichgewicht zwischen Ozon- und Sauerstoffgehalt einstellt, kann durch wirksame Kühlung der Zerfall von Ozon vermindert und dadurch die Ausbeute verbessert werden.

Im Gegensatz zu einem normalen Spalt, den das sauerstoffhaltige Gas und das erzeugte Ozon in nahezu laminarer Strömung durchströmt, wird durch die elektrisch leitfähige und wärmeleitfähige gasdurchlässige Anordnung eine turbulente Strömung im Spalt erzwungen mit der Folge, dass die Gasmoleküle auch immer wieder an die Oberfläche der direkt kühlbaren Elektroden gelangen und dadurch die Wärme besser abgeben können.

Durch die eingesetzten Materialien und die große Anzahl der Elektrodenanordnungen in einem leistungsfähigen Ozonerzeuger ist das Gewicht eines solchen Ozonerzeugers sehr hoch, was Materialkosten und Transportkosten erhöht. Auch das Verhalten bei einem Überschlag zwischen der Außenelektrode und der Innenelektrode bzw. den damit elektrisch leitend verbundenen Gestricken ist nicht optimal. Ein Durchschlag aufgrund eines Bruchs des Dielektrikums führt im allgemeinen zu einem Kurzschluss zwischen dem Elektrodenstab und dem als Außenelektrode wirkenden Wärmetauscherrohr, was zu einer Abschaltung des gesamten Ozonerzeugers führt.

Ausgehend von diesem Stand der Technik liegt der Erfindung die Aufgabe zugrunde, die Vorrichtung der eingangs genannten Art dahingehend zu verbessern, dass das Gesamtgewicht der Vorrichtung reduziert wird und das Verhalten bei einem Durchschlag verbessert wird.

Diese Aufgabe wird von einer Elektrodenanordnung mit den Merkmalen des Anspruchs 1 gelöst.

Weil bei der Elektrodenanordnung für einen Ozongenerator mit einer rohrförmigen Außenelektrode, die konzentrisch und in einem Abstand ein rohrförmiges Dielektrikum umgibt, wobei das Dielektrikum in einem Abstand konzentrisch einen Stab umgibt, und wobei in dem Zwischenraum zwischen der Außenelektrode und dem Dielektrikum sowie in dem Zwischenraum zwischen dem Dielektrikum und dem Stab ein Füllmaterial vorgesehen ist, der Stab ein Isolator ist, ist die gesamte Elektrodenanordnung leichter als im Stand der Technik ausführbar. Insbesondere kann bei einem Durchschlag aufgrund eines Bruchs des Dielektrikums die Elektrodenanordnung ein eigensicheres elektrisches Verhalten zeigen, weil bei dem Durchschlag die wesentlich leichtere Innenelektrode, die allein aus dem Füllmaterial besteht, verdampfen kann, ohne dass die wesentlich massereichere Außenelektrode beschädigt wird. Der Ozongenerator kann im Allgemeinen trotz des Durchschlags in Betrieb bleiben.

Die Fertigung ist besonders einfach, wenn der Stab massiv ist. Es kann auch vorgesehen sein, dass der Stab hohl ist, wodurch das Gewicht weiter gesenkt wird.

Eine besonders robuste Anordnung ergibt sich, wenn der Stab rund ist. Ein eckiger Stab kann jedoch die Fertigung vereinfachen.

Vorzugsweise ist der Stab aus einem technischen Glas gefertigt, beispielsweise aus einem Glas, das unter den Marken DURAN oder PYREX angeboten wird.

Vorzugsweise ist das Füllmaterial aus einem Drahtgestrick gefertigt, bevorzugt aus Edelstahl. Es können aber auch ein bei einfachen Anwendungen ein Geflecht oder Gewebe, ein Gewirk oder eine unstrukturierte Drahtmasse vorgesehen sein.

Ein besonders kompakter Aufbau ergibt sich, wenn das Füllmaterial (5) in dem Zwischenraum zwischen dem Dielektrikum und dem Stab unmittelbar mit einem Anschluss für eine elektrische Spannungsversorgung versehen ist.

Nachfolgend wird ein Ausführungsbeispiel der vorliegenden Erfindung anhand der Zeichnung beschrieben. Es zeigen:
- Figur 1:: eine Elektrodenanordnung für einen Ozongenerator in einer verkürzten Darstellung im Längsschnitt; sowie
- Figur 2:: die Elektrodenanordnung aus Figur 1 in einer perspektivischen Darstellung.

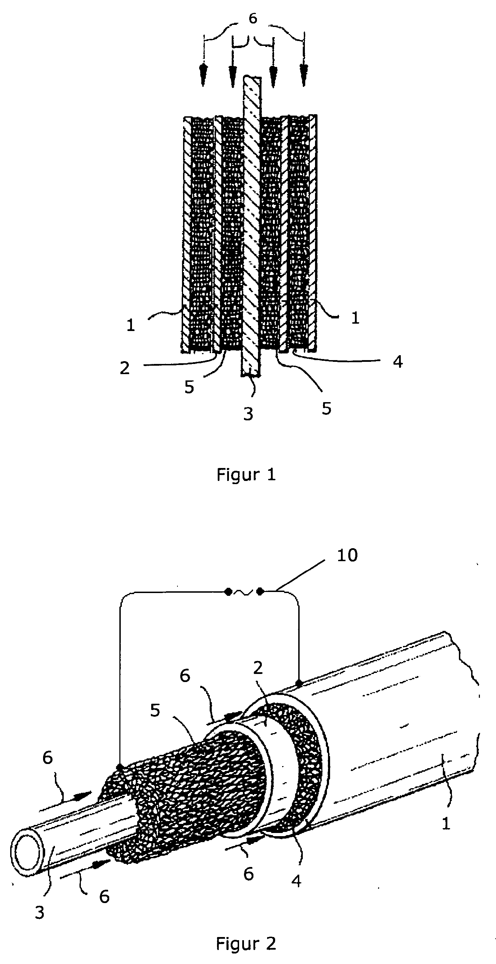

In der Figur 1 ist verkürzt und in einem Längsschnitt eine Elektrodenanordnung eines Ozongenerators mit einer rohrförmigen Außenelektrode 1, einem ebenfalls rohrförmigen Dielektrikum 2 und einem innenliegenden Stab 3 dargestellt. Die Anordnung ist rotationssymmetrisch. Die Außenelektrode 1, das Dielektrikum 2 und der Stab 3 sind konzentrisch zueinander ausgerichtet.

Zwischen der Außenelektrode 1 und dem Dielektrikum 2 liegt ein Drahtgestrick 4, das den Zwischenraum ausfüllt. Entsprechend ist zwischen dem Dielektrikum 2 und dem Stab 3 ein Drahtgestrick 5 vorgesehen, das den dort befindlichen Zwischenraum ebenfalls ausfüllt. Die Außenelektrode 1 ist in bekannter Weise als Edelstahlrohr ausgebildet und wird im Betrieb von außen gekühlt. Der mechanische Aufbau ist so ausgeführt, dass die Außenelektrode 1 Teil eines Rohrbündelwärmetauschers ist, der eine Vielzahl von Elektrodenanordnungen gemäß Figur 1 aufweist, die außen von Kühlwasser umströmt werden.

Das Dielektrikum 2 ist ebenfalls in bekannter Weise ein Glasrohr. Die Drahtgestricke 4 und 5 sind vorzugsweise als sogenannte Rundhohlschnur ebenfalls aus einem Drahtgeflecht aus Edelstahl gefertigt. Diese Komponenten sind aus dem gattungsbildenden Stand der Technik bekannt.

Der im Zentrum der Elektrodenanordnung angeordnete Stab 3 ist erfindungsgemäß ein Isolator, beispielsweise aus Glas oder aus einem anderen sauerstoff- und ozonkompatiblen Material gefertigt. Der Stab 3 kann, wie in Figur 1 dargestellt, massiv ausgeführt sein.

Im Betrieb wird in bekannter Weise die Elektrodenanordnung mit einem sauerstoffhaltigen Einsatzgas beaufschlagt, welches die Drahtgestricke 4 und 5 in Richtung der Pfeile 6 durchströmt.

Die Figur 2 zeigt die Elektrodenanordnung aus Figur 1 in einer schematischen perspektivischen Darstellung, wobei die einzelnen Komponenten in Axialrichtung auseinander gezogen dargestellt sind. Wie die Figur 2 zeigt, kann der Stab 3 auch als Rohr, beispielsweise als Glasrohr ausgeführt sein.

Schematisch ist eine elektrische Spannungsversorgung 10 angedeutet, die einerseits mit der Außenelektrode 1 und andererseits mit dem Gestrick 5 kontaktiert ist. Die von der Spannungsversorgung 10 zur Verfügung gestellte Betriebsspannung bewirkt in den Hohlräumen der Gestricke 4 und 5 eine stille elektrische Entladung, die aus dem Sauerstoff, der in Richtung der Pfeile 6 durch die Gestricke 4 und 5 strömt, Ozon generiert.

Bei dem in den Figuren 1 und 2 dargestellten Aufbau ist die innere Elektrode allein von dem Gestrick 5 gebildet, während der Stab 3 als Isolator eine stützende Funktion ausübt, die das gleichmäßige Ausfüllen des Innenraums des Dielektrikums 2 mit dem Drahtgestrick 5 gewährleistet. Der Stab 3 kann auch die Montage des Drahtgestricks 5 in dem Dielektrikum 2 erleichtern.

Es zeigt sich, dass der als Isolator ausgeführte Stab 3 im Vergleich zu den aus dem Stand der Technik bekannten elektrisch leitenden Zentralelektroden aus Edelstahl mehrere Vorteile aufweist, ohne die elektrischen Eigenschaften und insbesondere den Wirkungsgrad der Elektrodenanordnung hinsichtlich der Ozonerzeugung negativ zu beeinflussen. Die Vorteile des als Isolator ausgeführten Stabes 3 bestehen zum Einen im geringeren Gewicht. Während der üblicherweise eingesetzte Edelstahl eine Dichte von rund 7.900 kg/m³ aufweist, ist die Dichte eines technischen Glases, das für den Stab 3 verwendet werden kann, mit 2.230 kg/m³ angegeben. Auf Grund der großen Anzahl von Elektroden in einem leistungsfähigen Ozonerzeuger wird das Gesamtgewicht entsprechend reduziert.

Die notwendige elektrisch leitende Oberfläche für die zur Ozonerzeugung genutzte Barriereentladung kann auf eine minimal erforderliche Größe reduziert werden.

Ein wichtiger Aspekt besteht in dem Masseverhältnis zwischen der Außenelektrode 1 und dem als Gegenelektrode 5 eingesetzten Drahtgestrick. Während die Außenelektrode aus einem Edelstahlrohr gefertigt ist, das ein Gewicht pro Meter von etwa 350g aufweist, wird die Gegenelektrode aus einem Edelstahldraht mit einem Drahtdurchmesser von etwa 0,2 mm gefertigt und wiegt pro Meter nur rund 12 g. Das Drahtgestrick 5 ist also erheblich leichter als die Außenelektrode 1. Die Wärmekapazität, die Schmelztemperatur und die Schmelzenergie der verwendeten Materialien für die Außenelektrode 1 und für das Drahtgestrick 5 sind etwa gleich. Der Stab 3 nimmt an elektrischen Vorgängen im Falle eine Durchschlags nicht teil und kann dabei unberücksichtigt bleiben.

Dies bedeutet, dass im Falle eines Isolationsfehlers, der durch einen Bruch des Dielektrikums 2 auf Grund mechanischer Belastung entstehen kann, die Elektrodenanordnung ein eigensicheres Verhalten zeigt. Kommt es zu einem Kurzschluss zwischen der Außenelektrode 1 und dem Drahtgestrick 5, so wird auf Grund des oben beschriebenen Massenverhältnisses das Drahtgestrick 5 durch den elektrischen Überschlag verdampft, bis ein ausreichend großer Abstand zwischen dem Drahtgestrick 5 und der Außenelektrode 1 wieder hergestellt ist. Die Außenelektrode 1 wird auf Grund ihrer wesentlich größeren Masse hierbei nicht beschädigt oder beeinträchtigt. Die beschädigte Elektrode kann deshalb in dem Ozonerzeuger verbleiben und muss nicht sofort ausgetauscht werden. Dieses eigensichere Verhalten ist nicht erzielbar, wenn ein metallischer Leiter als zentraler Stab 3 und damit als Gegenelektrode im Zentrum der Elektrodenanordnung eingesetzt wird.

Als Material für den Stab 3 kommen vor allem technische Gläser in Frage, die als Stab aus rundem Vollmaterial, aus eckigem Vollmaterial oder auch als Rohr ausgeführt sein können. Die anderen Komponenten der Elektrodenanordnung entsprechen dem eingangs beschriebenen gattungsbildenden Stand der Technik, wobei die Kontaktierung der Spannungsversorgung 10 unmittelbar an dem Gestrick 5 erfolgt, während im Stand der Technik die Kontaktierung an der zentralen Elektrode erfolgen kann.

### Bezugszeichen

- 1.: Außenelektrode
- 2.: Dielektrikum
- 3.: Stab
- 4.: Drahtgestrick
- 5.: Drahtgestrick
- 6.: Strömungsrichtung
- 10.: elektrische Spannungsversorgung

## Patentansprüche

1. Elektrodenanordnung für einen Ozongenerator mit einer rohrförmigen Außenelektrode (1), die konzentrisch und in einem Abstand ein rohrförmiges Dielektrikum (2) umgibt, wobei das Dielektrikum (2) in einem Abstand konzentrisch einen Stab (3) umgibt, und wobei in dem Zwischenraum zwischen der Außenelektrode (1) und dem Dielektrikum (2) ein Füllmaterial (4) vorgesehen ist, sowie in dem Zwischenraum zwischen dem Dielektrikum (2) und dem Stab (3) ein Füllmaterial (5) vorgesehen ist, **dadurch gekennzeichnet, dass** der Stab (3) ein Isolator ist und das Füllmaterial (5) eine Innenelektrode bildet.

2. Elektrodenanordung nach Anspruch 1, **dadurch gekennzeichnet, dass** der Stab (3) massiv ist.

3. Elektrodenanordnung nach Anspruch 1, **dadurch gekennzeichnet, dass** der Stab (3) hohl ist.

4. Elektrodenanordnung nach einem der vorhergehenden Ansprüche, **dadurch gekennzeichnet, dass** der Stab (3) rund ist.

5. Elektrodenanordnung nach einem der vorhergehenden Ansprüche, **dadurch gekennzeichnet, dass** der Stab (3) aus Glas gefertigt ist

6. Elektrodenanordnung nach einem der vorhergehenden Ansprüche, **dadurch gekennzeichnet, dass** das Füllmaterial (4) und das Füllmaterial (5) aus einem Drahtgestrick gefertigt sind.

7. Elektrodenanordnung nach einem der vorhergehenden Ansprüche, **dadurch gekennzeichnet, dass** das Füllmaterial (5) in dem Zwischenraum zwischen dem Dielektrikum (2) und dem Stab (3) mit einem Anschluss für eine elektrische Spannungsversorgung (10) versehen ist.

8. Elektrodenanordnung nach einem der vorhergehenden Ansprüche, **dadurch gekennzeichnet, dass** der im Zentrum der Elektrodenanordnung angeordnete Stab (3) aus Glas oder aus einem anderen sauerstoff- oder ozonkompatiblen Material gefertigt ist.

## Claims

1. Electrode arrangement for an ozone generator having a tubular outer electrode (1) which surrounds a tubular dielectric (2) concentrically and at a distance, wherein the dielectric (2) surrounds a rod (3) concentrically at a distance, and wherein a filling material (4) is provided in the intermediate space between the outer electrode (1) and the dielectric (2), and a filling material (5) is provided in the intermediate space between the dielectric (2) and the rod (3), **characterised in that** the rod (3) is an insulator and the filling material (5) forms an inner electrode.

2. Electrode arrangement according to Claim 1, **characterised in that** the rod (3) is massive.

3. Electrode arrangement according to Claim 1, **characterised in that** the rod (3) is hollow.

4. Electrode arrangement according to any one of the preceding claims, **characterised in that** the rod (3) is round.

5. Electrode arrangement according to any one of the preceding claims, **characterised in that** the rod (3) is produced from glass.

6. Electrode arrangement according to any one of the preceding claims, **characterised in that** the filling material (4) and the filling material (5) are produced from a knitted wire mesh.

7. Electrode arrangement according to any one of the preceding claims, **characterised in that** the filling material (5) is provided with a connection for an electrical voltage supply (10) in the intermediate space between the dielectric (2) and the rod (3).

8. Electrode arrangement according to any one of the preceding claims, **characterised in that** the rod (3) arranged in the centre of the electrode arrangement is produced from glass or from another oxygen- or ozone-compatible material.

## Revendications

1. Agencement d'électrodes pour un générateur d'ozone comportant une électrode extérieure tubulaire (1) qui entoure de manière concentrique et à une certaine distance le diélectrique tubulaire (2), auquel cas le diélectrique (2) entoure à une certaine distance de manière concentrique une tige (3), et auquel cas l'on prévoit un matériau de remplissage (4) dans l'espace intermédiaire entre l'électrode extérieure (1) et le diélectrique (2) ainsi qu'un matériau de remplissage (5) dans l'espace intermédiaire entre le diélectrique (2) et la tige (3), **caractérisé en ce que** la tige (3) est un isolant et que le matériau de remplissage (5) forme une électrode intérieure.

2. Agencement d'électrodes selon la revendication 1, **caractérisé en ce que** la tige (3) est solide.

3. Agencement d'électrodes selon la revendication 1, **caractérisé en ce que** la tige (3) est creuse.

4. Agencement d'électrodes selon une des revendications précédentes, **caractérisé en ce que** la tige (3) est ronde.

5. Agencement d'électrodes selon une des revendications précédentes, **caractérisé en ce que** la tige (3) est réalisée en verre.

6. Agencement d'électrodes selon une des revendications précédentes, **caractérisé en ce que** le matériau de remplissage (4) et le matériau de remplissage (5) sont fabriqués à partir d'un treillis métallique.

7. Agencement d'électrodes selon une des revendications précédentes, **caractérisé en ce que** le matériau de remplissage (5) dans l'espace intermédiaire entre le diélectrique (2) et la tige (3) est pourvu d'un raccordement pour une alimentation en courant électrique (10).

8. Agencement d'électrodes selon une des revendications précédentes, **caractérisé en ce que** la tige (3) agencée au centre de l'agencement d'électrodes est réalisée en verre ou en un tout autre matériau compatible avec l'oxygène ou avec l'ozone.
